(19) **Europäisches Patentamt**

**European Patent Office**

**Office européen des brevets**

(11) **EP 1 540 436 B1**

(12) **FASCICULE DE BREVET EUROPEEN**

(45) Date de publication et mention de la délivrance du brevet:
**20.12.2006 Bulletin 2006/51**

(21) Numéro de dépôt: **03769542.6**

(22) Date de dépôt: **29.08.2003**

(51) Int Cl.:
*G05D 1/08* *(2006.01)*     *G05D 1/06* *(2006.01)*

(86) Numéro de dépôt international:
**PCT/FR2003/002611**

(87) Numéro de publication internationale:
**WO 2004/025386 (25.03.2004 Gazette 2004/13)**

(54) **SYSTEME D'ASSISTANCE AU PILOTAGE DE L'ALTITUDE ET DE LA VITESSE HORIZONTALE, PERPENDICULAIRE A L'APLOMB, D'UN AERONEF ET AERONEFS EQUIPES DE CE SYSTEME.**

**LENKHILFESYSTEM FÜR HÖHE UND HORIZONTALGESCHWINDIGKEIT, SENKRECHTE ZUR VERTIKALEN EINES FLUGZEUGS UND DAMIT AUSGESTATTETES FLUGZEUG**

**STEERING AID SYSTEM FOR ALTITUDE AND HORIZONTAL SPEED, PERPENDICULAR TO THE VERTICAL, OF AN AIRCRAFT AND AIRCRAFT EQUIPPED THEREWITH**

(84) Etats contractants désignés:
**AT BE BG CH CY CZ DE DK EE ES FI FR GB GR HU IE IT LI LU MC NL PT RO SE SI SK TR**

(30) Priorité: **16.09.2002 FR 0211454**

(43) Date de publication de la demande:
**15.06.2005 Bulletin 2005/24**

(73) Titulaire: **CENTRE NATIONAL DE LA RECHERCHE SCIENTIFIQUE (CNRS)**
**75016 Paris (FR)**

(72) Inventeurs:
- **FRANCESCHINI, Nicolas**
  **F-13009 MARSEILLE (FR)**
- **RUFFIER, Franck**
  **F-13009 MARSEILLE (FR)**
- **VIOLLET, Stéphane**
  **F-13009 MARSEILLE (FR)**
- **BOYRON, Marc**
  **F-13003 MARSEILLE (FR)**

(74) Mandataire: **Domenego, Bertrand**
**Cabinet Lavoix**
**2, place d'Estienne d'Orves**
**75441 Paris Cedex 09 (FR)**

(56) Documents cités:
**US-A- 3 927 306      US-A- 4 628 455**
**US-A- 4 748 569**

- **DOYLE R S ET AL: "Multi-sensor data fusion for helicopter guidance using neuro-fuzzy estimation algorithms" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, 22 octobre 1995 (1995-10-22), pages 1392-1397, XP010194472 ISBN: 0-7803-2559-1**

**Description**

L'invention concerne un système d'assistance au pilotage de l'altitude et de la vitesse horizontale, perpendiculaire à l'aplomb, d'un aéronef.

Aujourd'hui, quel que soit l'aéronef utilisé, il est nécessaire d'éviter les collisions avec le sol. Le pilote doit donc contrôler et commander en permanence l'altitude et la vitesse horizontale de l'aéronef. Pour cela, il peut agir sur le tangage de l'aéronef et/ou sur la puissance développée par les moyens de sustentation de l'aéronef.

Par tangage, il est désigné ici le déplacement angulaire de l'aéronef autour d'un axe défini comme étant son axe transversal, c'est-à-dire autour d'un axe perpendiculaire à l'axe autour duquel s'effectuent les déplacements de roulis et à l'axe autour duquel s'effectuent les mouvements de lacet.

Le tangage et la puissance développée par les moyens de sustentation sont des paramètres modifiant tous deux l'altitude et la vitesse horizontale. Ainsi, le pilotage d'un aéronef requiert de nombreuses heures d'apprentissage, de manière à acquérir le doigté nécessaire à la commande simultanée de ces deux paramètres. Pour assister le pilote dans la commande de ces deux paramètres, des systèmes de pilotage automatique ont été proposés. Toutefois, ces systèmes ne sont capables d'assister le pilote que lors de certaines phases de pilotage telles que, par exemple, le vol en régime stationnaire ou de croisière à haute altitude, et sont, de plus, compliqués, encombrants, lourds et onéreux. En effet, ils comportent généralement au moins une première boucle d'asservissement pour la commande de l'altitude et une seconde boucle d'asservissement pour la commande de la vitesse horizontale. Ces boucles d'asservissement sont compliquées à établir, puisqu'une action sur la vitesse horizontale a des conséquences sur l'altitude et vice-versa.

Des exemples de systèmes existants peuvent par exemple être trouvés dans US 4,748,569 A, US 3,927,306 A, US 4,628,155 A ou encore dans l'article suivant :

> « Multi-sensor data fusion for helicopter guidance using neuro-fuzzy estimation algorithms », DOYLE R.S. et al, Systems, Man and Cybernetics, 1995. Intelligent Systems for the 21st Century, IEEE International Conference on Vancouver.

L'invention vise à remédier à cet inconvénient en proposant un système d'assistance au pilotage de l'altitude et de la vitesse horizontale plus simple.

L'invention a donc pour objet un système d'assistance au pilotage de l'altitude et de la vitesse horizontale, perpendiculaire à l'aplomb, d'un aéronef, l'altitude et la vitesse horizontale étant pilotées en faisant varier le tangage de l'aéronef et/ou la puissance développée par des moyens de sustentation de cet aéronef,

caractérisé en ce qu'il comporte :

- un dispositif de mesure apte à délivrer un signal mesuré fonction à la fois et simultanément de l'altitude de l'aéronef et de la vitesse horizontale de l'aéronef,

- une même valeur de référence prédéterminée pour l'altitude et la vitesse horizontale de l'aéronef, cette valeur étant indépendante des variations dudit signal mesuré, et

- des moyens formant une boucle d'asservissement dudit signal à ladite valeur de référence, ces moyens étant aptes à faire varier automatiquement le tangage et/ou la puissance développée par les moyens de sustentation pour asservir le signal mesuré à la valeur de référence.

Le système d'assistance au pilotage ci-dessus régule et commande le tangage et/ou la puissance développée par les moyens de sustentation à partir d'un seul signal fonction à la fois et simultanément de l'altitude et de la vitesse horizontale. Ainsi, pour piloter automatiquement à la fois l'altitude et la vitesse horizontale de l'aéronef, et contrairement aux systèmes existants, une seule boucle d'asservissement est nécessaire. Le système décrit ici est donc plus simple que les systèmes connus.

Suivant d'autres caractéristiques d'un système conforme à l'invention :

- les moyens formant la boucle d'asservissement comportent :

  - une unité de commande soit uniquement du tangage, soit uniquement de la puissance développée par les moyens de sustentation en fonction d'une commande d'entrée, et

  - un soustracteur apte à établir ladite commande d'entrée à partir de la différence entre ledit signal et ladite valeur de référence, de manière à compenser cette différence,

- ledit signal mesuré est représentatif du quotient de la vitesse horizontale par l'altitude de l'aéronef,

- le dispositif de mesure comporte :

  - un premier et un second capteurs aptes chacun à mesurer des variations d'une caractéristique de la surface survolée, chaque capteur ayant une ligne de visée décalée angulairement d'un angle $\Delta\phi$ de celle de l'autre capteur, de manière à ce que le premier et le second capteurs mesurent successivement une même variation lors d'un déplacement de l'aéronef, et une unité de traitement apte à établir l'intervalle de temps $\Delta T$ écoulé entre la mesure par le premier capteur d'une dite variation et la mesure de cette même variation par le second capteur, et à délivrer en tant que signal mesuré un signal dont la valeur est une fonction décroissante et monotone de cet intervalle de temps établi,

- le signal délivré par l'unité de traitement en tant que signal mesuré est représentatif du quotient du décalage angulaire Δφ relatif des lignes de visée par l'intervalle de temps ΔT établi,
- ladite caractéristique est l'intensité d'un rayonnement électromagnétique dans une zone spectrale située entre l'ultraviolet et les ondes millimétriques, émis par la surface survolée,
- le premier et le second capteurs sont chacun un photo-capteur,
- le premier et le second capteurs sont associés à un dispositif automatique de maintien de l'orientation de chacune des lignes de visée constante par rapport à l'aplomb de l'aéronef,
- pour un aéronef dont la puissance développée par les moyens de sustentation est modifiée en faisant varier un pas collectif d'une ou plusieurs voilures tournantes, ce pas collectif étant commandable, l'unité de commande est apte à commander ledit pas collectif pour commander la puissance développée par les moyens de sustentation,
- pour un aéronef dont la puissance développée par les moyens de sustentation est modifiée en faisant varier la vitesse de rotation d'une voilure tournante, cette vitesse de rotation étant commandable, l'unité de commande est apte à commander ladite vitesse de rotation pour commander la puissance développée par les moyens de sustentation,
- pour un aéronef dont le tangage est modifié en fonction de la position d'une gouverne de profondeur commandable, l'unité de commande est apte à commander ladite position de la gouverne de profondeur.

L'invention a également pour objet un aéronef, caractérisé en ce qu'il comporte un système d'assistance au pilotage conforme à l'invention.

L'invention sera mieux comprise à la lecture de la description qui va suivre, donnée uniquement à titre d'exemple, et faite en se référant aux dessins, sur lesquels :

- la figure 1 est une illustration schématique de l'architecture d'un hélicoptère équipé d'un système d'assistance au pilotage conforme à l'invention,
- la figure 2 est une illustration schématique d'un régulateur de l'altitude et de la vitesse horizontale de l'hélicoptère de la figure 1, et

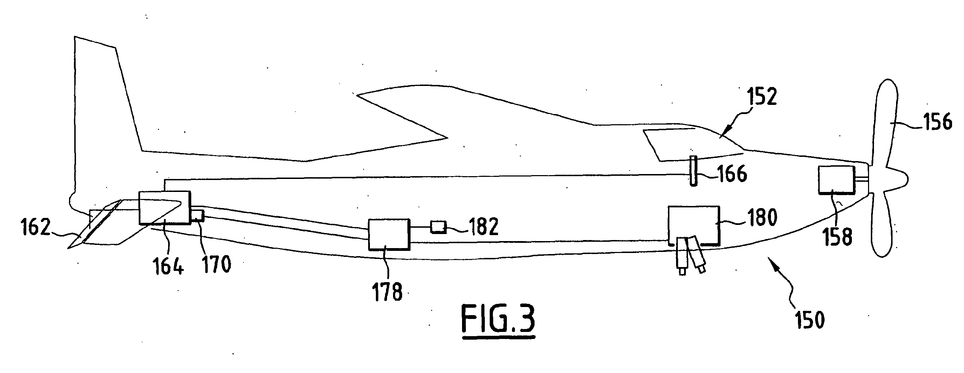

- la figure 3 est une illustration schématique de l'architecture d'un avion équipé d'un système d'assistance au pilotage conforme à l'invention.

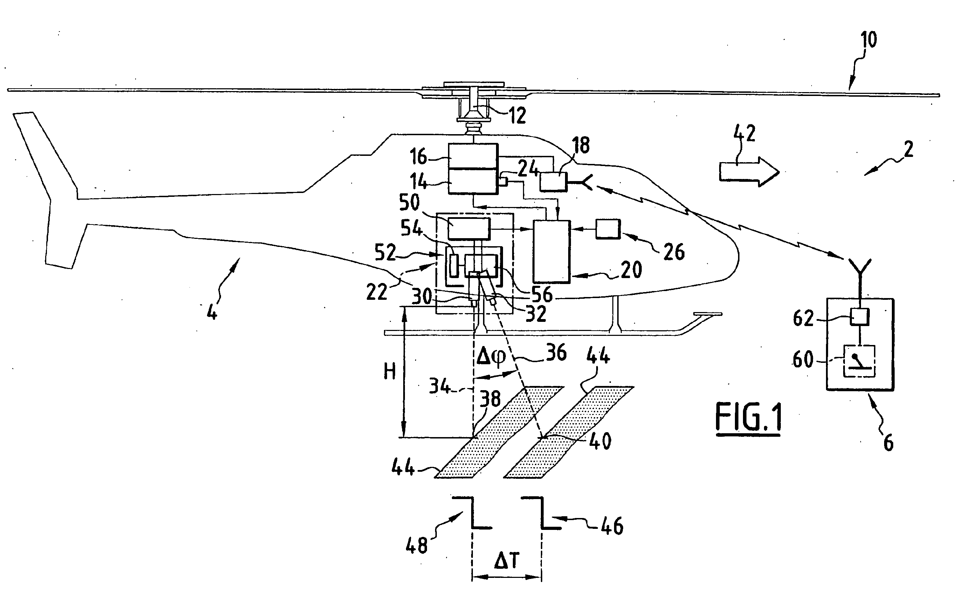

La figure 1 représente un système 2 d'assistance au pilotage de l'altitude et de la vitesse horizontale d'un aéronef dans le cas particulier où cet aéronef est un giravion, ici un hélicoptère 4, télécommandé à distance à l'aide d'une unité de pilotage 6.

L'hélicoptère 4 est équipé d'une voilure tournante 10 entraînée en rotation par l'intermédiaire d'un rotor 12 d'un moteur 14. La vitesse de rotation du rotor 12 est commandable en fonction d'une consigne de vitesse, de manière à faire varier la vitesse de rotation de la voilure tournante 10.

L'hélicoptère 4 comporte aussi un mécanisme 16 de commande du tangage de l'hélicoptère en fonction d'une consigne de tangage. Ce mécanisme 16 est apte à incliner l'axe de rotation de la voilure tournante 10 par rapport à la direction horizontale, de manière à créer une accélération horizontale non nulle. Le terme "horizontal" désigne, ici, une direction perpendiculaire à la verticale ou à l'aplomb de l'hélicoptère 4.

Le mécanisme 16 est raccordé ici à un récepteur radio 18 destiné à recevoir une consigne de tangage transmise par l'unité de pilotage 6 et à délivrer cette consigne de tangage reçue au mécanisme 16.

L'hélicoptère 4 comporte également un régulateur 20 de l'altitude et de la vitesse horizontale de l'hélicoptère raccordé à un dispositif de mesure 22, à un capteur 24 de la vitesse de rotation du rotor 12 et à une seule consigne 26 d'altitude et de vitesse horizontale.

Le dispositif de mesure 22, ou détecteur de mouvement 22, est destiné à délivrer au régulateur 20 un signal à la fois fonction de l'altitude et de la vitesse horizontale de l'hélicoptère 4. Ce dispositif de mesure 22 est connu et ne sera décrit ici que succinctement. Pour plus d'informations sur ce dispositif 22, le lecteur pourra se référer, par exemple, aux travaux mentionnés ci-dessous :

- Blanes, C.: "Appareil visuel élémentaire pour la navigation "à vue" d'un robot mobile autonome", DEA de neurosciences, Université d'Aix-Marseille II, 1986,
- Blanes, C. : "Guidage visuel d'un robot mobile autonome d'inspiration bionique", Thèse de doctorat de l'Institut Polytechnique, Grenoble, 1991.

Le dispositif 22 comporte, par exemple, uniquement deux photo-capteurs 30 et 32 aptes chacun à mesurer l'intensité lumineuse en un seul point de la surface survolée au cours des déplacements de l'hélicoptère 4. Ces photo-capteurs 30 et 32 sont directifs et sont respectivement associés à une seule ligne de visée 34 et 36, toutes les deux dirigées vers la surface survolée. Des points de visée 38 et 40, placés respectivement à l'intersection des lignes de visée 34 et 36 et de la surface survolée, représentent les points où l'intensité lumineuse diffusée ou émise par la surface survolée est mesurée. Chaque point de visée correspond sensiblement à un pixel d'une photo de la surface survolée prise à la même altitude. Les lignes de visée 34 et 36 sont situées dans un même plan perpendiculaire à l'axe transversal autour duquel le tangage de l'hélicoptère 4 s'effectue. De plus, ces lignes de visée 34 et 36 sont décalées angulairement l'une par rapport à l'autre d'un angle Δφ constant. Cet angle Δφ est choisi pour que l'intensité lumineuse de tout point sur la surface survolée, mesurée par le capteur 32, soit également mesurée quelques instants après ou quelques instants avant par le capteur 30, selon que l'hélicoptère avance ou recule.

Ici, la ligne de visée 34 est verticale, tandis que la ligne de visée 36 est située plus en avant dans la direction du déplacement horizontal de l'hélicoptère 4 représentée par une flèche 42 sur la figure 1.

Sur la figure 1, le point de visée 40 est représenté ici, dans le cas simplifié où il rencontre une brusque discontinuité 44 d'intensité lumineuse, par exemple une limite entre une surface claire et une surface plus foncée. La variation d'intensité lumineuse mesurée par le photo-capteur 32 correspondant à cette discontinuité 44 est représentée, sur la figure 1, par un signal 46 en forme de marches d'escalier descendantes, dont le front descendant correspond à la limite entre la surface plus lumineuse et la surface plus foncée.

De façon similaire, le point de visée 38 est représenté à l'instant où, après que l'hélicoptère se soit déplacé dans la direction de la flèche 42, celui-ci rencontre la même discontinuité d'intensité lumineuse 44. La variation d'intensité lumineuse, mesurée par le photo-capteur 30 à ce moment-là, est représentée sur la figure 1 par un signal 48, identique au signal 46. L'intervalle de temps écoulé entre l'instant où le photo-capteur 32 mesure la discontinuité 44 et l'instant où le photo-capteur 30 mesure cette même discontinuité 44 est noté ΔT et est représenté sur la figure 1 par une flèche séparant les fronts descendants des signaux 46 et 48.

Sur la figure 1, l'altitude H de l'hélicoptère 4 est représentée par une flèche séparant le point de visée 38 et le photo-capteur 30.

Associé aux photo-capteurs 30 et 32, le dispositif de mesure 22 comporte un calculateur 50 ou unité de traitement 50 apte à délivrer au régulateur 20 le signal fonction à la fois de l'altitude et de la vitesse horizontale de l'hélicoptère 4. Ce calculateur 50 est ici propre à établir l'intervalle de temps ΔT écoulé entre l'instant où l'un des capteurs 30, 32 mesure une discontinuité d'intensité lumineuse et l'instant où l'autre capteur mesure cette même discontinuité et à délivrer le signal correspondant au rapport de Δφ/ΔT au régulateur 20. Ce signal Δφ/ΔT est sensiblement décrit par la relation suivante :

$$\Delta\phi/\Delta T = \frac{V \times \Delta\phi}{H \times \tan g\Delta\phi}$$

où V est la vitesse horizontale de l'hélicoptère 4.

Pour de petits angles Δφ entre les lignes de visée 34, 36, on obtient :

$$\Delta\phi/\Delta T \cong V/H \text{ [rad/s]}$$

Dans la suite de cette description, ce signal Δφ/ΔT est appelé vitesse angulaire. C'est la vitesse relative moyenne (exprimée en radians par seconde) d'un contraste au sol, vu du point d'intersection des axes optiques des photo-capteurs 30 et 32.

Dans le mode de réalisation décrit ici, les photo-capteurs 30 et 32 sont associés à un dispositif 52 de maintien de la position des lignes de visée 34 et 36 constante par rapport à la verticale de l'hélicoptère 4, et ceci quel que soit le tangage de cet hélicoptère. Par exemple, ce dispositif 50 est réalisé à l'aide d'un gyroscope vertical ou d'un détecteur d'horizon 54 raccordé à un servomoteur 56.

Le gyroscope ou le détecteur d'horizon 54 est propre à délivrer au servomoteur 56 un signal lui indiquant où est la verticale.

Le servomoteur 56 est apte, en réponse à ce signal, à déplacer en rotation les photo-capteurs 30 et 32, de manière à maintenir la ligne de visée 34 alignée sur la verticale. Ainsi, les mesures réalisées par ces photo-capteurs 30 et 32 sont indépendantes du tangage de l'hélicoptère 4.

La consigne 26, raccordée au régulateur 20, est une consigne de vitesse angulaire. Ainsi, lorsque l'hélicoptère avance à vitesse V constante, la consigne 26 impose une altitude H constante par rapport à la surface survolée. Cette altitude imposée peut être considérée comme "altitude de sécurité" car elle est d'autant plus élevée que la vitesse de l'appareil est grande. La consigne 26 est ici constante et indépendante des variations du signal délivré par le dispositif de mesure 22.

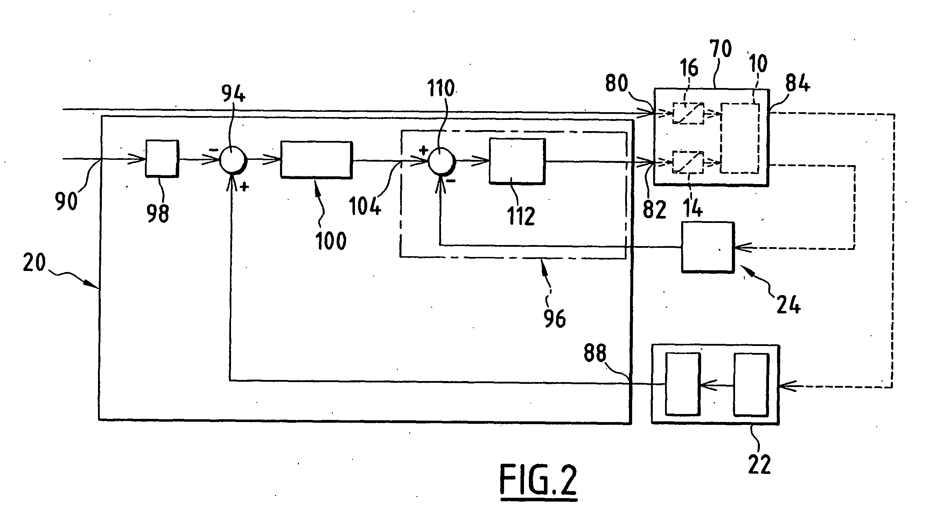

Le régulateur 20 est, dans ce mode de réalisation, uniquement destiné à commander la vitesse de rotation du rotor 12 pour maintenir une altitude correspondant à la consigne 26. Ce régulateur 20 sera décrit en regard de la figure 2.

L'unité de pilotage 6 comporte une manette 60 de commande du tangage de l'hélicoptère 4 raccordée à un émetteur radio 62 propre à transmettre la consigne de tangage correspondant à la position de la manette 60 au récepteur 18 de l'hélicoptère 4.

La figure 2 représente un schéma-bloc correspondant au système d'assistance au pilotage de la figure 1. Sur ce schéma-bloc, les blocs correspondant à des éléments déjà décrits en regard de la figure 1 portent les mêmes références numériques.

Un bloc 70 regroupant le moteur 14, le mécanisme 16 de commande du tangage et la voilure tournante 10, admet deux commandes d'entrée 80 et 82 correspondant respectivement à la consigne de tangage transmise par le récepteur 18 et à la consigne de vitesse du rotor transmise par le régulateur 20 au moteur 14. Ce bloc 70 comporte également une sortie 84, représentant l'altitude et la vitesse horizontale de l'hélicoptère 4, obtenue en fonction des commandes d'entrée 80 et 82. Cette sortie 84 est raccordée par une flèche en traits pointillés au dispositif de mesure 22 pour indiquer que ce sont cette altitude et cette vitesse horizontale qui sont mesurées par ce dispositif de mesure 22.

Le dispositif de mesure délivre à une entrée 88 du régulateur 20 la vitesse angulaire mesurée.

Le régulateur 20 comporte une autre entrée 90 par laquelle est reçue la consigne 26 de vitesse angulaire.

Le régulateur 20 contient un soustracteur 94 raccordé à une unité de commande 96 de la vitesse du rotor 12 formant, lorsqu'ils sont associés au dispositif de mesure 22, une seule et unique boucle d'asservissement de la vitesse angulaire de l'hélicoptère 4 à la consigne 26.

Ici, le soustracteur 94 est propre à établir la différence entre la vitesse angulaire mesurée reçue par l'intermédiaire de l'entrée 88 et la consigne 26 reçue par l'entrée 90 pour construire un signal de commande de l'unité 96. A cet effet, le soustracteur 94 comporte une borne négative raccordée par l'intermédiaire d'un bloc 98 de mise à l'échelle à l'entrée 90, une borne positive raccordée directement à l'entrée 88 et une sortie raccordée à l'entrée d'un correcteur 100 à action proportionnelle et dérivée, ou correcteur PD. Ce correcteur 100, placé en amont de la boucle d'asservissement de la vitesse angulaire, est connu et réglé de façon conventionnelle pour stabiliser le système en améliorant la dynamique.

Le correcteur 100, élabore une consigne de vitesse du rotor 12 à appliquer pour rattraper la différence entre la consigne 26 de vitesse angulaire et la vitesse angulaire mesurée. La consigne de vitesse du rotor 12 est raccordée à une entrée 104 de l'unité de commande 96.

L'unité de commande 96 est destinée à asservir la vitesse du rotor 12 sur la consigne de vitesse reçue à l'entrée 104.

L'unité de commande 96 comporte, à cet effet, une boucle secondaire d'asservissement formée à l'aide d'un soustracteur 110 et d'un correcteur 112 à action proportionnelle, intégrale et dérivée, ou correcteur PID.

Le soustracteur 110 est apte à établir la différence entre la consigne de vitesse reçue à l'entrée 104 et la vitesse du rotor 12 mesurée par le capteur 24. Sur la figure 2, ce capteur 24 est raccordé à une sortie du bloc 70 par une ligne en pointillés pour indiquer que ce capteur mesure la vitesse effective du rotor 12.

Une sortie du soustracteur 110 délivre à l'entrée du correcteur PID 112 le signal correspondant à la différence de la consigne de vitesse du rotor et de sa vitesse mesurée.

Le correcteur PID 112 est connu et réglé de façon conventionnelle de façon à stabiliser la boucle d'asservissement de la vitesse du rotor 12 et à améliorer la dynamique de cette boucle. Une sortie de ce correcteur 112 est raccordée à l'entrée du moteur 14 et forme la commande de vitesse 82.

Le régulateur 20 et le dispositif de mesure 22 sont réalisés de façon classique à l'aide de composants électroniques connus. Avantageusement, les composants électroniques utilisés sont regroupés pour présenter un encombrement réduit et une faible masse, de l'ordre du décigramme.

Le fonctionnement de l'hélicoptère 4 décrit aux figures 1 et 2 va maintenant être décrit.

Lors du fonctionnement du régulateur 20, deux situations peuvent se présenter.

La première situation correspond au cas où la vitesse angulaire mesurée par le dispositif de mesure 22 est supérieure à la consigne 26. Dans cette situation, la différence, établie par le soustracteur 94 entre la vitesse angulaire mesurée et la consigne 26, est positive. Cette différence positive correspond, après avoir été corrigée par le correcteur 100, à une consigne d'accroissement de la vitesse de rotation du rotor 12 transmise à l'entrée 104 de l'unité de commande 96. En réponse à cette consigne d'accroissement de la vitesse du rotor 12, l'unité de commande 96 commande le moteur 14 pour accroître la vitesse de rotation du rotor 12 et asservit cette vitesse à la consigne de vitesse reçue à l'entrée 104 par l'intermédiaire de la boucle d'asservissement formée par le capteur 24, le soustracteur 110 et le correcteur 112. Une augmentation de la vitesse de rotation du rotor 12 va entraîner une augmentation marquée de l'altitude, accompagnée d'une légère augmentation de la vitesse horizontale de l'hélicoptère 4. Il en résulte globalement une diminution de la vitesse angulaire mesurée par le dispositif de mesure 22. Ainsi, la différence entre la consigne 26 et la vitesse angulaire mesurée diminue, ce qui se traduit par une diminution de la consigne de vitesse du rotor transmise à l'entrée 104. Cette correction en boucle de la vitesse du rotor se poursuit jusqu'à ce qu'un régime stationnaire s'établisse. Lors du régime stationnaire, la vitesse angulaire mesurée est sensiblement constante et égale à la consigne 26 de vitesse angulaire.

Dans la situation inverse, où la vitesse angulaire mesurée est inférieure à la consigne 26, la différence établie par le soustracteur 94 est alors négative. Cette différence négative, après avoir été corrigée par le correcteur 100, correspond à une consigne de diminution de la vitesse de rotation du rotor 12 transmise à l'entrée 104 de l'unité de commande 96. En réponse à cette consigne de diminution de la vitesse de rotation du rotor, l'unité 96 commande le moteur 14 et décroît la vitesse de rotation du rotor 12. Une diminution de la vitesse de rotation du rotor 12 va entraîner une diminution marquée de l'altitude, accompagnée d'une légère diminution de la vitesse horizontale de l'hélicoptère 4. Il en résulte globalement une augmentation de la vitesse angulaire mesurée par le dispositif 22. Cette augmentation de la vitesse angulaire mesurée se traduit par une différence établie par le soustracteur 94 plus petite en module, mais toujours négative. Cette nouvelle différence établie par le soustracteur 94 se traduit par une commande de diminution de la vitesse du rotor 12 plus petite en module et donc par une diminution de la vitesse du rotor 12 plus petite pour retourner progressivement vers un régime stationnaire correspondant à une vitesse angulaire mesurée sensiblement constante.

Ainsi, grâce à seulement une boucle d'asservissement de la vitesse angulaire de l'hélicoptère 4, formée par le dispositif de mesure 22, le soustracteur 94, le correcteur 100 et l'unité de commande 96, l'altitude et la vitesse horizontale de l'hélicoptère 4 sont automatiquement commandées.

Le procédé de pilotage de l'hélicoptère 4 équipé du régulateur 20 se déroule comme suit. Le procédé débute par une étape d'initialisation de la consigne 26, par exemple, lors de l'installation du régulateur 20 dans l'hélicoptère 4. Cette consigne 26, une fois initialisée, n'est plus modifiée lors des opérations de navigation de l'hélicoptère 4.

Ensuite, un opérateur procède à une mise en sustentation initiale de l'hélicoptère 4. Par exemple, un opérateur active le moteur 14, ce qui conduit dans le cas de l'hélicoptère 4 à un décollage le long de la verticale de l'hélicoptère 4. L'opérateur transmet ensuite, à l'aide de l'unité de pilotage 6, une consigne de tangage initial à l'hélicoptère 4. En réponse à cette consigne, le mécanisme 16 déplace la voilure tournante 10 de la position horizontale dans laquelle elle se trouvait jusqu'à une position légèrement inclinée vis-à-vis de cette horizontale.

Dès que la voilure tournante 10 est légèrement inclinée par rapport à l'horizontale et que l'hélicoptère 4 a commencé à se déplacer horizontalement, la suite des opérations de décollage de l'hélicoptère 4 s'effectue entièrement automatiquement grâce au régulateur 20, sans nouvelles interventions de l'opérateur. En effet, juste après le décollage, l'altitude de l'hélicoptère 4 est faible devant la vitesse horizontale, la vitesse angulaire délivrée par le dispositif 22 est donc supérieure à la consigne 26. Dans ces conditions, comme décrit ci-dessus, le régulateur 20 commande le moteur 14 pour accroître la vitesse de rotation du rotor 12 et donc accroître l'altitude de l'hélicoptère 4 jusqu'à ce qu'un régime stationnaire s'établisse.

Lorsque ce régime stationnaire est établi, tant que la consigne de tangage n'est pas modifiée par l'opérateur, que la surface survolée est plane, et que la vitesse horizontale de l'hélicoptère n'est pas perturbée, la consigne 26 correspond à une altitude et à une vitesse horizontale constantes.

Si l'hélicoptère 4 survole un obstacle proéminent, l'altitude apparente H décroît, ce qui se traduit par une augmentation de la vitesse angulaire mesurée. Par conséquent, le régulateur 20 accroît la vitesse de rotation du rotor 12 pour augmenter l'altitude et retrouver ainsi la vitesse angulaire de consigne 26. Ainsi, après une brève phase transitoire, l'hélicoptère 4 survole l'obstacle proéminent tout en conservant une altitude constante vis-à-vis de cet obstacle. De façon similaire, lorsque l'hélicoptère survole un creux, l'altitude augmente, ce qui conduit à une diminution de la vitesse angulaire mesurée, et le régulateur 20 commande alors une diminution de la vitesse du rotor 12, donc une diminution de l'altitude H pour rattraper la consigne 26.

Ainsi, le régulateur 20 décrit ici permet d'adapter automatiquement l'altitude de l'hélicoptère 4 au relief des surfaces survolées. En particulier, toute collision avec un obstacle sous-jacent est automatiquement évitée.

Si maintenant ce n'est plus l'altitude de l'hélicoptère 4 qui est perturbée par des éléments extérieurs, mais sa vitesse horizontale. Par exemple, si un vent porteur soufflant dans la direction de la flèche 42 accroît la vitesse horizontale de l'hélicoptère 4, ceci se traduit par une augmentation de la vitesse angulaire mesurée, qui va entraîner une augmentation de la vitesse du rotor 12 par le régulateur 20. Ainsi, en cas de vent porteur, l'hélicoptère 4 accroît automatiquement son altitude, maximisant par là-même la sécurité de sa navigation. En effet, plus la vitesse horizontale d'un hélicoptère est élevée, plus il lui serait difficile d'éviter les obstacles proches. D'où l'intérêt de voir naître ici, automatiquement, une altitude de sécurité d'autant plus élevée que la vitesse est grande.

Dans le cas contraire, c'est-à-dire si l'hélicoptère est soumis à un vent de face, sa vitesse horizontale diminue, ce qui correspond à une diminution de la vitesse angulaire mesurée. Le régulateur 20 commande alors automatiquement le moteur 14 pour décroître la vitesse de rotation du rotor 12, ce qui se traduit par une diminution de l'altitude. Ainsi, en cas de fort vent de face, l'hélicoptère 4 réduit simultanément sa vitesse horizontale et son altitude, ce qui peut le conduire à atterrir. Un tel atterrissage n'est pas dangereux, puisqu'il s'effectue à vitesse horizontale nulle au moment même où le sol est atteint.

Finalement, la vitesse angulaire mesurée par le dispositif 22 peut aussi résulter d'une intervention de l'opérateur. Par exemple, l'opérateur peut décider, en cours de navigation, de modifier progressivement la consigne de tangage à l'aide de l'unité de pilotage 6. Par exemple, s'il augmente l'inclinaison de la voilure tournante 10 par rapport à l'horizontale, cela conduit simultanément à un accroissement de la vitesse horizontale de l'hélicoptère et à une diminution de l'altitude, c'est-à-dire essentiellement à une augmentation de la vitesse angulaire mesurée. Par conséquent, dans ces conditions là, le régulateur 20 commande le moteur 14 de manière à accroître la vitesse du rotor 12, ce qui conduit surtout à augmenter l'altitude de l'hélicoptère 4 jusqu'à ce qu'il retrouve la consigne originale 26 de vitesse angulaire.

Dans le cas contraire, c'est-à-dire si l'opérateur envoie une consigne de tangage pour ramener la voilure tournante à l'horizontale, la vitesse horizontale diminue et le régulateur 20 décroît alors automatiquement la vitesse du rotor 12 pour décroître l'altitude jusqu'à une valeur nulle lorsque la vitesse horizontale de l'hélicoptère 4 est nulle. L'opérateur réalise ainsi une opération d'atterrissage de l'hélicoptère 4 en ne commandant que le tangage de ce dernier.

Ainsi, le système 2 simplifie considérablement la commande d'un hélicoptère, puisque l'opérateur chargé du pilotage n'a plus qu'à commander un seul paramètre - ici le tangage de l'hélicoptère - pour atterrir, décoller, accélérer ou ralentir.

La figure 4 représente un système 150 d'assistance au pilotage de l'altitude et de la vitesse horizontale d'un avion classique 152. Cet avion 152 est équipé d'une hélice 156 , associée à des ailes, entraînée en rotation par un moteur 158 dont la vitesse de rotation est réglable.

L'avion 152 comporte également une gouverne 162 de profondeur déplaçable en rotation, destinée à commander le tangage de l'avion. Cette gouverne 162 est actionnée par un actionneur de gouverne 164 relié à un levier de commande 166 de la gouverne de profondeur placée dans le cockpit de l'avion. Un capteur 170 de position de la gouverne 162 est également associé à cette gouverne 162 pour réaliser un asservissement de position.

Finalement, l'avion 152 est équipé d'un régulateur 178, raccordé au capteur 170, à l'actionneur 164, à un dispositif de mesure 180 et à une consigne de sécurité constante 182.

Le dispositif de mesure 180 est identique au dispositif de mesure de la figure 1.

La consigne 182 est constante et initialisée à une valeur correspondant à une altitude de sécurité en dessous de laquelle l'avion 152 ne doit pas descendre si sa vitesse est supérieure à une vitesse dangereuse. Cette consigne correspond à une valeur constante de vitesse angulaire.

Le régulateur 178 est destiné à commander automatiquement la gouverne de profondeur 162 pour piloter automatiquement l'altitude et la vitesse horizontale de l'avion. Ce régulateur 178 est, par exemple, identique au régulateur 20 de la figure 1, à l'exception du fait qu'il n'est activé que lorsque la vitesse angulaire mesurée par le dispositif 180 devient supérieure à la consigne 182.

Dans ce mode de réalisation, tant que la vitesse angulaire mesurée par le dispositif 180 est inférieure à la consigne 182, le régulateur 178 reste inactif et seul le pilote commande la vitesse de rotation de l'hélice 156 et la gouverne de profondeur 162.

En cas d'obstacle proéminent sur la trajectoire de l'avion, l'altitude H au-dessus de l'obstacle diminue brusquement par rapport à ce qu'elle était auparavant, tandis que la vitesse horizontale de l'avion demeure sensiblement constante. Ceci correspond à une augmentation soudaine de la vitesse angulaire. Lorsque la vitesse angulaire devient supérieure à la consigne 182, le régulateur 178 prend le contrôle de l'avion et pilote automatiquement la gouverne de profondeur 162. La vitesse angulaire de l'avion étant supérieure à la consigne 182, le régulateur 178 commande la gouverne de profondeur de manière à réduire la vitesse angulaire. Ici, le régulateur 178 commande donc l'actionneur 164 pour déplacer en rotation la gouverne de profondeur en direction du ciel, ce qui va entraîner une augmentation de l'altitude ainsi qu'une diminution de la vitesse horizontale de l'avion. La vitesse angulaire mesurée se voit donc diminuée pour cette double raison. Ensuite, le régulateur commande cette gouverne 162 pour asservir la vitesse angulaire mesurée à la consigne 182.

Ainsi, à l'aide du système 150, tant que le pilote ne reprend pas les commandes de l'avion, le régulateur 178 ramène l'avion à une hauteur de sécurité et évite toute collision avec des obstacles.

Ensuite, pour reprendre les commandes de l'avion 152, le pilote doit réaliser des opérations conduisant à diminuer la vitesse angulaire en dessous de la consigne 182. Par exemple, le pilote manoeuvre le levier de commande de manière à augmenter l'altitude de l'avion ou diminue la vitesse de rotation de l'hélice 156. Une fois que les manoeuvres du pilote ont rendu la vitesse angulaire mesurée inférieure à la consigne 182, le régulateur 178 est de nouveau désactivé pour laisser le pilote manoeuvrer l'avion.

Ainsi, dans ce mode de réalisation, le système 150 d'assistance au pilotage est utilisé en tant que système de sécurité permettant d'éviter une collision de l'avion avec le sol.

Le système de la figure 1 a été décrit dans le cas particulier où le régulateur 20 commande la vitesse du rotor 12 de manière à asservir la vitesse angulaire mesurée à une consigne. En variante, le régulateur 20 est adapté pour commander automatiquement le tangage de l'aéronef de manière à asservir la vitesse angulaire mesurée à une consigne. Dans cette variante, les moyens formant une boucle d'asservissement sont, par exemple, identiques à ceux de la figure 1, à l'exception de l'unité 96 de commande de la vitesse du rotor qui est remplacée par une unité de commande du tangage de l'aéronef. Ainsi, dans cette variante, le pilotage de l'aéronef par un opérateur consiste à envoyer des consignes de vitesse de rotation du rotor et non plus des consignes de tangage.

La description du système a été faite dans le cas simplifié de brusques discontinuités 44 de l'intensité lumineuse diffusée par la surface survolée. Dans la réalité, les discontinuités 44 sont remplacées par des variations progressives de l'intensité lumineuse diffusée par la surface survolée. Dans ce cas, les variations d'intensité lumineuse mesurée par les photo-capteurs sont progressives et correspondent à un gradient ou un taux de variation de la caractéristique mesurée.

L'exemple de dispositif de mesure de la vitesse angulaire a été décrit ici dans le cas particulier où il ne comporte que deux photo-capteurs. Toutefois, en variante, le dispositif de mesure de la vitesse angulaire comporte au moins trois photo-capteurs de manière à augmenter la précision des mesures et le champ visuel. Ces photo-capteurs peuvent appartenir à une barrette ou une matrice d'éléments photo-sensibles.

De façon à anticiper les obstacles placés sur la trajectoire de l'aéronef, en variante, les lignes de visée 34 et 36 des photo-capteurs sont toutes les deux inclinées vers l'avant de l'aéronef pour que les points de visée 38 et 40 soient d'avantage orientés dans la direction de son déplacement. Ainsi, dans cette variante, un obstacle est plus rapidement détecté et le régulateur réagit plus tôt.

Ici, le système d'assistance au pilotage a été décrit uniquement dans le cas d'un hélicoptère et d'un avion. Toutefois, un tel système de pilotage est applicable à tout système apte à se déplacer au-dessus d'une surface sans contact direct avec celle-ci. Par exemple, le système décrit ici est adapté pour assister le pilotage ou télé-pilotage de véhicules divers tels que dirigeables, montgolfières, tous types d'hélicoptères équipés d'une ou plusieurs voilures tournantes, tous types d'avions et de vecteurs aériens drones et microdrones. Ce système est également apte à assister le pilotage de sous-marins et d'engins spatiaux habités ou non habités. Dans le cas des sous-marins, l'altitude se rapporte au fond du milieu aqueux d'une mer, d'un lac ou d'une rivière, tandis que dans le cas des engins spatiaux, l'altitude se rapporte à la distance le séparant d'un objet spatial tel qu'une planète, un satellite (naturel ou artificiel), une sonde spatiale, un astéroïde ou une comète.

Le système 2 a été décrit ici dans le cas particulier où le tangage de l'hélicoptère 4 était télécommandé par un opérateur et où la puissance développée par les moyens de sustentation 156 était commandée par un pilote. Toutefois, en variante, le paramètre, choisi parmi le tangage et la puissance développée par les moyens de sustentation, qui n'est pas automatiquement commandé par un régulateur tel que le régulateur 20, est soit :

- commandé par un pilote à bord de l'aéronef,
- télécommandé à distance par un opérateur, soit
- commandé automatiquement à partir de signaux provenant de capteurs additionnels prévus dans l'aéronef tels que, par exemple, des capteurs proprioceptifs ou encore des systèmes de vision.

Dans une autre variante, la consigne de vitesse angulaire 26 ou 182 est remplacée par une consigne réglable et commandable par un opérateur et/ou un pilote, ou encore à partir de signaux issus d'autres capteurs embarqués.

En variante, le calculateur est remplacé par un système de traitement purement numérique ou analogique, ou encore hybride entre la solution purement numérique et la solution purement analogique.

Dans d'autres variantes encore, les discontinuités ou gradients de luminance de la surface survolée ne concernent pas le spectre visible par l'homme, mais l'infrarouge, l'ultraviolet ou les ondes millimétriques. La luminance de la surface survolée peut résulter d'un éclairage par une source naturelle ou de la projection d'un rayonnement à partir du véhicule.

Finalement, il est important de noter que le système décrit ne nécessite aucune mesure directe, ni de l'altitude, ni de la vitesse horizontale de l'appareil par rapport à la surface survolée. La simplicité et la faible charge de calcul du système décrit, synonymes de légèreté, faible encombrement et bas coût, le prédestinent à une utilisation sur tout engin aérospatial ou sous-marin, et même sur les petits engins sans pilotes, connus sous le terme de "drones", "micro-drones' ou "micro-aéronefs".

**Revendications**

1. Système d'assistance au pilotage de l'altitude et de la vitesse horizontale, perpendiculaire à l'aplomb, d'un aéronef (4 ; 152), l'altitude et la vitesse horizontale étant pilotées en faisant varier le tangage de l'aéronef et/ou la puissance développée par des moyens (10 ; 156) de sustentation de cet aéronef, **caractérisé en ce qu'**il comporte:

   - un dispositif de mesure (22 ; 180) apte à délivrer un signal mesuré fonction à la fois et simultanément de l'altitude de l'aéronef et de la vitesse horizontale de l'aéronef,
   - une même valeur (26 ; 182) de référence prédéterminée pour l'altitude et la vitesse horizontale de l'aéronef, cette valeur étant indépendante des variations dudit signal mesuré, et
   - des moyens (20 ; 178) formant une boucle d'asservissement dudit signal à ladite valeur de référence, ces moyens étant aptes à faire varier automatiquement le tangage et/ou la puissance développée par les moyens de sustentation pour asservir le signal mesuré à la valeur de référence.

2. Système selon la revendication 1, **caractérisé en ce que** les moyens (20 ; 178) formant la boucle d'asservissement comportent :

   - une unité (96) de commande soit uniquement du tangage, soit uniquement de la puissance développée par les moyens (10 ; 156) de sustentation en fonction d'une commande d'entrée, et
   - un soustracteur (94) apte à établir ladite commande d'entrée à partir de la différence entre ledit signal et ladite valeur de référence, de manière à compenser cette différence.

3. Système selon l'une quelconque des revendications précédentes, **caractérisé en ce que** ledit signal mesuré est représentatif du quotient de la vitesse horizontale par l'altitude de l'aéronef.

4. Système selon la revendication 3, **caractérisé en ce que** le dispositif de mesure comporte :

- un premier et un second capteurs (30, 32) aptes chacun à mesurer des variations (44) d'une caractéristique de la surface survolée, chaque capteur ayant une ligne de visée (34, 36) décalée angulairement d'un angle Δϕ de celle de l'autre capteur, de manière à ce que le premier et le second capteurs (30, 32) mesurent successivement une même variation lors d'un déplacement de l'aéronef, et

- une unité de traitement (50) apte à établir l'intervalle de temps ΔT écoulé entre la mesure par le premier capteur d'une dite variation et la mesure de cette même variation par le second capteur, et à délivrer en tant que signal mesuré un signal dont la valeur est une fonction décroissante et monotone de cet intervalle de temps établi.

5. Système selon la revendication 4, **caractérisé en ce que** le signal délivré par l'unité de traitement en tant que signal mesuré est représentatif du quotient du décalage angulaire relatif Δϕ des lignes de visée (34, 36) par l'intervalle de temps ΔT établi.

6. Système selon la revendication 4 ou 5, **caractérisé en ce que** ladite caractéristique est l'intensité d'un rayonnement électromagnétique dans une zone spectrale située entre l'ultraviolet et les ondes millimétriques émis par la surface survolée.

7. Système selon la revendication la revendication 6, **caractérisé en ce que** le premier et le second capteurs (30, 32) sont chacun un photo-capteur.

8. Système selon l'une quelconque des revendications 4 à 7, **caractérisé en ce que** le premier et le second capteurs (30, 32) sont associés à un dispositif automatique (52) de maintien de l'orientation de chacune des lignes de visée constante par rapport à l'aplomb de l'aéronef.

9. Système selon l'une quelconque des revendications 2 à 8, pour un aéronef dont la puissance développée par les moyens de sustentation est modifiée en faisant varier un pas collectif d'une ou plusieurs voilures tournantes, ce pas collectif étant commandable, **caractérisé en ce que** l'unité de commande est apte à commander ledit pas collectif pour commander la puissance développée par les moyens de sustentation.

10. Système selon l'une quelconque des revendications 2 à 8, pour un aéronef (4) dont la puissance développée par les moyens de sustentation est modifiée en faisant varier la vitesse de rotation d'une voilure tournante (10), cette vitesse de rotation étant commandable, **caractérisé en ce que** l'unité de commande est apte à commander ladite vitesse de rotation pour commander la puissance développée par les moyens de sustentation.

11. Système selon l'une quelconque des revendications 2 à 8, pour un aéronef (152) dont le tangage est modifié en fonction de la position d'une gouverne (162) de profondeur commandable, **caractérisé en ce que** l'unité de commande (96) est apte à commander ladite position de la gouverne (162) de profondeur.

12. Aéronef, **caractérisé en ce qu'**il comporte un système d'assistance au pilotage selon l'une quelconque des revendications précédentes.

## Claims

1. System for assisting control of the altitude and horizontal - perpendicular to plumb - speed of an aircraft (4; 152), the altitude and horizontal speed being controlled by varying the pitch of the aircraft and/or the power developed by lift-producing means (10; 156) of that aircraft,

**characterised in that** it comprises:

- a measuring device (22; 180) arranged to deliver a measured signal which is simultaneously a function of both the altitude of the aircraft and the horizontal speed of the aircraft,
- one and the same predetermined reference value (26; 182) for the altitude and horizontal speed of the aircraft, that value being independent of variations in said measured signal, and
- means (20; 178) forming a control loop linking said signal to said reference value, those means being arranged to automatically vary the pitch and/or the power developed by the lift-producing means in order to link the measured signal to the reference value.

2. System according to claim 1, **characterised in that** the means (20; 178) forming the linking control loop comprise:

- a unit (96) for controlling either solely the pitch or solely the power developed by the lift-producing means (10; 156) as a function of an input control and
- a subtracter (94) arranged to establish said input control on the basis of the difference between said signal and said reference value so as to compensate that difference.

3. System according to any one of the preceding claims, **characterised in that** said measured signal is representative of the quotient of the horizontal speed divided by the altitude of the aircraft.

**4.** System according to claim 3, **characterised in that** the measuring device comprises:

- first and second sensors (30, 32) each arranged to measure variations (44) in a characteristic of the flown-over surface, each sensor having a line of sight (34, 36) angularly offset by an angle $\Delta\phi$ from that of the other sensor so that the first and second sensors (30, 32) successively measure one and the same variation in the course of movement by the aircraft, and
- a processing unit (50) arranged to establish the time interval $\Delta T$ that has passed between the measurement by the first sensor of such a variation and the measurement of that same variation by the second sensor and to deliver, as the measured signal, a signal the value of which is a decreasing and monotonic function of that established time interval.

**5.** System according to claim 4, **characterised in that** the signal delivered by the processing unit as the measured signal is representative of the quotient of the relative angular offset $\Delta\phi$ of the lines of sight (34, 36) divided by the established time interval $\Delta T$.

**6.** System according to claim 4 or 5, **characterised in that** said characteristic is the intensity of electromagnetic radiation in a spectral zone located between the ultraviolet and the millimetre waves emitted by the flown-over surface.

**7.** System according to claim 6, **characterised in that** the first and second sensors (30, 32) are, in each case, a photosensor.

**8.** System according to any one of claims 4 to 7, **characterised in that** the first and the second sensors (30, 32) are associated with an automatic device (52) for maintaining the orientation of each of the lines of sight constant with respect to plumb of the aircraft.

**9.** System according to any one of claims 2 to 8, for an aircraft wherein the power developed by the lift-producing means is modified by varying a collective pitch of one or more rotary wings, that collective pitch being controllable, **characterised in that** the control unit is arranged to control said collective pitch in order to control the power developed by the lift-producing means.

**10.** System according to any one of claims 2 to 8, for an aircraft (4) wherein the power developed by the lift-producing means is modified by varying the speed of rotation of a rotary wing (10), that speed of rotation being controllable, **characterised in that** the control unit is arranged to control said speed of rotation in order to control the power developed by the lift-producing means.

**11.** System according to any one of claims 2 to 8, for an aircraft (152) wherein the pitch is modified as a function of the position of a controllable elevator (162), **characterised in that** the control unit (96) is arranged to control said position of the elevator (162).

**12.** Aircraft, **characterised in that** it comprises a system for assisting control according to any one of the preceding claims.

**Patentansprüche**

**1.** Steuerungshilfssystem für Höhe und Horizontalgeschwindigkeit, senkrecht zur Vertikalen eines Luftfahrzeugs (4; 152), wobei die Höhe und die Horizontalgeschwindigkeit gesteuert werden, indem die Nickbewegung des Luftfahrzeugs und/oder die durch Auftriebsmittel (10; 156) dieses Luftfahrzeugs entwickelte Kraft verändert wird,
**dadurch gekennzeichnet, dass** es umfasst:

- eine Messvorrichtung (22; 180), die dafür vorgesehen ist, ein Messsignal in Abhängigkeit von gleichzeitig sowohl der Höhe des Luftfahrzeugs als auch der Horizontalgeschwindigkeit des Luftfahrzeugs auszugeben,
- ein- und denselben vorgegebenen Referenzwert (26; 182) für die Höhe und die Horizontalgeschwindigkeit des Luftfahrzeugs, wobei dieser Wert unabhängig ist von den Veränderungen des Messsignals, und
- Mittel (20; 178), die eine Schleife bilden zur Angleichung des Signals an den Referenzwert, wobei diese Mittel dafür vorgesehen sind, die Nickbewegung und/oder die von Auftriebsmitteln entwickelte Kraft automatisch zu verändern, um das Messsignal an den Referenzwert anzugleichen.

**2.** System entsprechend Anspruch 1,
**dadurch gekennzeichnet, dass** die Mittel (20, 178), die eine Angleichungsschleife bilden, umfassen:

- eine Einheit (96) zur Steuerung entweder nur der Nickbewegung oder nur der von den Auftriebsmitteln (10 ;156) entwickelten Kraft in Abhängigkeit eines Eingangsbefehls und
- einen Substrahierer (94), der dafür vorgesehen ist, den Eingangsbefehl ausgehend von der Differenz zwischen dem Signal und dem Referenzwert zu bilden derart, dass diese Differenz ausgeglichen wird.

**3.** System entsprechend einem der vorstehenden Ansprüche,
**dadurch gekennzeichnet, dass** das Messsignal repräsentativ ist für den Quotienten aus der Horizontalgeschwindigkeit geteilt durch die Höhe des Luftfahrzeugs.

4. System entsprechend Anspruch 3,
   **dadurch gekennzeichnet, dass** die Messvorrichtung umfasst:

   - einen ersten und einen zweiten Sensor (30, 32), die jeweils in der Lage sind, die Veränderungen (44) einer Kennlinie der überflogenen Fläche zu messen, wobei die Ziellinie (34, 36) jedes Sensors jeweils um einen Winkel ΔΦ winkelversetzt ist zu der des anderen Sensors derart, dass der erste und der zweite Sensor (30, 32) nacheinander ein- und dieselbe Veränderung bei der Bewegung des Luftfahrzeugs messen, und
   - eine Verarbeitungseinheit (50), mit der das Zeitintervall ΔT gebildet wird, das sich zwischen der Messung einer derartigen Veränderung durch den ersten Sensor und der Messung eben dieser Veränderung durch den zweiten Sensor ergibt, und die als Messsignal ein Signal ausgibt, dessen Wert eine absteigende, gleichförmige Funktion des gebildeten Zeitintervalls ist.

5. System entsprechend Anspruch 4,
   **dadurch gekennzeichnet, dass** das von der Verarbeitungseinheit ausgegebene Signal als Messsignal repräsentativ ist für den Quotienten aus der relativen Winkelverschiebung ΔΦ der Ziellinien (34, 36) geteilt durch das gebildete Zeitintervall ΔT.

6. System entsprechend Anspruch 4 oder 5,
   **dadurch gekennzeichnet, dass** die Kennlinie die Intensität einer elektromagnetischen Abstrahlung in einem Spektralbereich ist, der sich zwischen dem Ultraviolett und den von der überflogenen Fläche ausgesendeten Millimeterwellen befindet.

7. System entsprechend Anspruch 6,
   **dadurch gekennzeichnet, dass** der erste und der zweite Sensor (30, 32) jeweils ein Fotosensor sind.

8. System entsprechend einem der Ansprüche 4 bis 7,
   **dadurch gekennzeichnet, dass** der erste und der zweite Sensor (30, 32) mit einer automatischen Vorrichtung (52) zur Aufrechterhaltung der konstanten Ausrichtung jeder der Ziellinien relativ zur Senkrechten des Luftfahrzeugs sind.

9. System entsprechend einem der Ansprüche 2 bis 8, für ein Luftfahrzeug,
   bei dem die durch die Auftriebsmittel entwickelte Kraft verändert wird durch Veränderung eines kollektiven Schritts eines oder mehrerer Rotoren, wobei dieser kollektive Schritt steuerbar ist,
   **dadurch gekennzeichnet, dass** die Steuereinheit dafür vorgesehen ist, den kollektiven Schritt zu steuern, um die von den Auftriebsmitteln entwickelte Kraft zu steuern.

10. System entsprechend einem der Ansprüche 2 bis 8, für ein Luftfahrzeug (4),
    bei dem die durch die Auftriebsmittel entwickelte Kraft verändert wird durch Veränderung der Drehzahl eines Rotors (10), wobei die Drehzahl steuerbar ist,
    **dadurch gekennzeichnet, dass** die Steuereinheit dafür vorgesehen ist, die Drehzahl zu steuern, um die von den Auftriebsmitteln entwickelte Kraft zu steuern.

11. System entsprechend einem der Ansprüche 2 bis 8, für ein Luftfahrzeug (152),
    bei dem die Nickbewegung in Abhängigkeit von der Position eines steuerbaren Tiefenruders (162) verändert wird,
    **dadurch gekennzeichnet, dass** die Steuereinheit (96) dafür vorgesehen ist, die Position des Tiefenruders (162) zu steuern.

12. Luftfahrzeug,
    **dadurch gekennzeichnet, dass** es ein Steuerungshilfssystem entsprechend einem der vorangegangenen Ansprüche aufweist.

FIG.1

FIG.2

EP 1 540 436 B1

FIG.3

EP 1 540 436 B1